# EUROPÄISCHE PATENTSCHRIFT

(11) **EP 1 268 157 B1**
(45) Veröffentlichungstag und Bekanntmachung des Hinweises auf die Patenterteilung: **26.03.2008**
(21) Anmeldenummer: 01923531.6
(22) Anmeldetag: 22.03.2001
(51) Int. Cl.: B29C 47/00, E06B 3/22

(54) **HOHLKAMMERPROFIL**
HOLLOW CHAMBER PROFILE
PROFILE A CHAMBRES CREUSES

(30) Priorität: 23.03.2000 DE 10014186
(43) Veröffentlichungstag der Anmeldung: 02.01.2003
(73) Patentinhaber: profine GmbH, 53840 Troisdorf (DE)
(72) Erfinder: BORNHOLDT, Alexander, 53721 Siegburg (DE); BURGHARD, Walter, 53842 Troisdorf (DE); OBERMEIER, Karl, 53844 Troisdorf (DE)
(74) Vertreter: Wübken, Ludger
(86) Internationale Anmeldenummer: PCT/DE2001/001132
(87) Internationale Veröffentlichungsnummer: WO 2001/070482

(56) Entgegenhaltungen:
- DE-U- 29 507 846
- US-A- 3 812 230
- US-A- 4 100 243

## Beschreibung

### Technisches Gebiet

Die Erfindung betrifft ein Hohlkammerprofil zur Herstellung von Fenstern und/oder Türen sowie die Verwendung eines Verfahrens zu deren Herstellung.

Fenster- oder Türprofile mit mehreren durch Stege gebildeten Hohlkammern werden insbesondere aus Hart-PVC mit Außenwandstärken zwischen 2 und 3,5 mm extrudiert. Bei der Extrusion wird der thermoplastische Kunststoff zunächst in einem Extruder plastifiziert, in einem Extrusionswerkzeug zu dem gewünschten Hohlkammerprofil geformt und anschließend in einem nachgeschalteten Kaliber kalibriert. In aller Regel werden sogenannte Außenkaliber verwendet, in der die Außenkontur des Profils kalibriert und gekühlt wird, während bei den Innenkammern gewisse Toleranzen zulässig sind.

Üblicherweise weisen sowohl das Blendrahmen- als auch das Flügelrahmenprofil eine zentrale Verstärkungskammer zur Aufnahme eines Verstärkungsprofils - üblicherweise aus Stahl - sowie vorgelagerte kleinere Kammern auf, die der besseren Wärmeisolierung dienen. Im Zuge verstärkter Anforderungen an die Wärmedämmung werden zunehmend 4- und 5-Kammerprofile entwickelt, bei denen 4 bzw. 5 nebeneinander angeordnete Kammern für eine bessere Wärmedämmung sorgen.

Es erweist sich allerdings als sehr problematisch, die Zahl der nebeneinander angeordneten Kammern zu erhöhen, da bei der Extrusion solcher Hohlkammerprofile mit größer werdender Kammeranzahl die Kühlung der inneren Stege bei der üblichen Kühlung der Profile im Kaliber von außen immer länger dauert und damit die Extrusionsgeschwindigkeit bei gleicher Kaliberlänge sinkt.

### Stand der Technik

Es ist grundsätzlich bekannt, Hohlkammerprofile auch mit einer sogenannten Innenkühlung zu extrudieren, siehe z. B. EP 0 515 906 B1 und US 4,100,243. Dabei wird üblicherweise mittels mehrerer durch die Kerne ("Torpedos") des Extrusionswerkzeugs geführter Kühlmittelschläuche ein gasförmiges oder flüssiges Kühlmedium an die Innenwände der Hohlkammern geleitet, um diese schneller abzukühlen. Die Hohlkammern müssen hierzu aber eine relativ große lichte Weite aufweisen, so daß bei hoher Kammeranzahl die Profile entweder sehr breit werden oder nur eine sehr schmale Verstärkungskammer aufweisen.

Aus der DE 295 07 846 U1 ist Blendrahmenprofil für Fenster und Türen bekannt, das als Mehrkammer-Profil mit einem im wesentlichen L-Querschnitt mit einer äußeren und inneren Sichtfläche, die von zueinander parallelen Stegen gebildet sind, ausgebildet ist. Es weist eine an die innere Sichtfläche angrenzende, durch einen im wesentlichen parallel zum Steg mit der inneren Sichtfläche verlaufenden Zwischensteg abgeteilte innere Vorkammer auf. Um die Stabilität des Blendrahmenprofils bezüglich de Verankerung und Verschraubung von Beschlägen und der Ausreißfestigkeit der Verschraubungen zu verbessern, ist in der inneren Vorkammer ein die Innenseite des die innere Sichtfläche bildenden Steges mit dem Zwischensteg verbindendes, im Querschnitt annähernd H-förmiges Gitter ausgebildet, das die innere Vorkammer in vier Teilkammern unterteilt.

### Aufgabe

Aufgabe der Erfindung ist es, ein Hohlkammerprofil mit mehreren nebeneinander angeordneten Kammern zur Verfügung zu stellen, das mit Außen- und Innenkühlung hergestellt werden kann.

### Darstellung der Erfindung

Die Erfindung löst diese Aufgabe durch ein Hohlkammerprofil nach Anspruch 1 bzw. die Verwendung eines Verfahrens nach Anspruch 4, bevorzugt in Verbindung mit einem oder mehreren der Merkmale der Untersprüche.

Das erfindungsgemäße Hohlkammerprofil zur Herstellung von Fenstern und/oder Türen weist neben einer Verstärkungskammer wenigstens eine weitere, der Verstärkungskammer nach innen oder außen vorgelagerten Kammer und insgesamt wenigstens fünf nebeneinander angeordnete Kammern auf. Die vorgelagerte Kammer kann der Verstärkungskammer unmittelbar benachbart oder durch eine weitere Kammer von dieser getrennt sein.

Die vorgelagerte Kammer weist zwei im wesentlichen parallel zur Innen- und Außensichtfläche des Hohlkammerprofils verlaufende Kammerwände auf und wird durch mehrere Stege in kleinere Kammern unterteilt. Die Unterteilung der vorgelagerten Kammer erfolgt dabei durch gegenüber den Kammerwänden schräg verlaufende Stege, so daß die lichte Weite jeder der kleineren Kammern an wenigstens einer Stelle mindestens 5 mm und an wenigstens einer anderen Stelle weniger als 5 mm beträgt. Auf diese Weise wird erreicht, daß einerseits die Kammern im Mittel möglichst schmal bleiben, während andererseits die lichte Weite der Kammern an der breitesten Stelle noch ausreicht, um im Extrusionswerkzeug die Kühlmittelzufuhr bewerkstelligen zu können. Bevorzugt ist die größte Weite der einzelnen so gebildeten Kammern kleiner als 8 mm, besonders bevorzugt kleiner 7 mm. Die einzelnen kleinen Kammern können spitz zulaufen, was einer kleinsten lichten Weite von 0 mm entspricht, oder stumpf enden mit einer kleinsten lichten Weite von weniger als 5 mm, bevorzugt weniger als 3,5 mm. Die Länge der spitz bzw. stumpf zulaufenden kleinen Kammern beträgt bevorzugt 10 bis 70 mm, die mittlere lichte Weite beträgt bevorzugt weniger als 5 mm.

Durch die schräge Anordnung der Stege in der vorgelagerten Kammer wird gleichzeitig eine Erhöhung der Torsionssteifigkeit des Hohlkammerprofils erzielt.

Für die Herstellung des Hohlkammerprofil wird erfindungsgemäß eine Kombination von Außenkühlung in einem Kaliber und eine Innenkühlung sämtlicher Kammern eingesetzt. Hierzu weist das Extrusionswerkzeug für jede Innenkammer jeweils eine Kühlmittelzufuhr auf, die durch die sogenannten Torpedos des Werkzeuges geführt werden. Gekühlt wird vorteilhaft mit einem Luft-/Wasser-Gemisch.

Mit dem erfindungsgemäßen Verfahren sind Extrusionsgeschwindigkeiten > 4 m pro Minute zu erreichen.

### Kurze Beschreibung der Zeichnung

Die Erfindung wird nachfolgend anhand eines Ausführungsbeispiels sowie der Zeichnung näher erläutert. Es zeigt dabei:

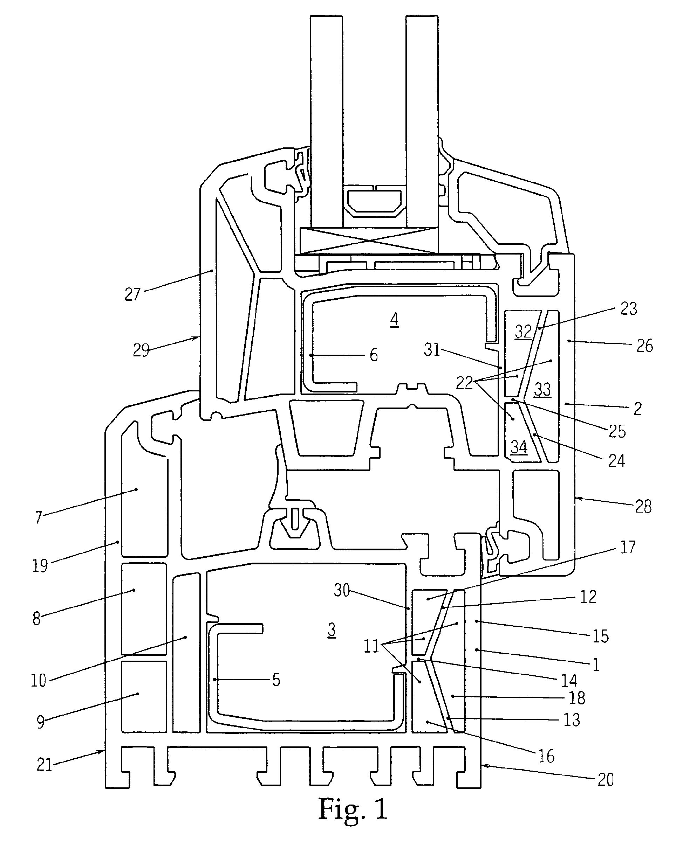

- Fig. 1: einen Querschnitt eines Blendrahmen- und eines Flügelrahmenprofil nach der Erfindung.

### Bester Weg zur Ausführung der Erfindung

Das in Fig. 1 maßstäblich dargestellte Blendrahmenprofil 1 ist als 70 mm breites 5-Kammerprofil ausgeführt. Es weist von außen nach innen die außenliegenden Kammern 7, 8 und 9, die Zwischenkammer 10, die große Verstärkungskammer 3 sowie die unterteilte Innenkammer 11 auf. In die Verstärkungskammer 3 kann ein Verstärkungsprofil 5 eingeschoben werden. Die Außenwandung des Blendrahmenprofils 1 ist in Fig. 1 mit dem Bezugszeichen 19, die Außensichtfläche mit 21 bezeichnet.

Die von der Innenwandung 15 und der Wandung 30 gebildete Innenkammer 11 ist durch die Stege 12, 13 und 14 wiederum in die kleineren Kammern 16, 17 18 unterteilt, von denen die jeweils nebeneinander angeordneten Kammern 17 und 18 einerseits und 16 und 18 andererseits durch die schräg zur Innensichtfläche 20 verlaufenden Stege 12 bzw. 13 getrennt werden. Hierdurch wird erreicht, daß sich das Innenmaß der drei Kammern 16, 17 und 18 jeweils zwischen etwa 2 bis etwa 6 mm bewegt. An der jeweils breitesten Stelle dieser Kammern 16, 17 und 18 reicht die lichte Weite gerade aus, um die Kühlmittelzufuhr für diese Kammern durch das Extrusionswerkzeug zu führen.

In Fig. 1 ist ebenfalls maßstäblich das als 70 mm breites 5-Kammerprofil ausgeführte Flügelrahmenprofil 2 dargestellt. Es weist wie das Blendrahmenprofil eine große Verstärkungskammer 4 sowie die unterteilte Innenkammer 22 auf. In die Verstärkungskammer 4 kann ein Verstärkungsprofil 6 eingeschoben werden. Die Außenwandung des Flügelrahmenprofils 2 ist in Fig. 1 mit dem Bezugszeichen 27, die Außensichtfläche mit 29 bezeichnet.

Die von der Innenwandung 26 und der Wandung 31 gebildete Innenkammer 22 ist durch die Stege 23, 24 und 25 wiederum in die kleineren Kammern 32, 33 34 unterteilt, von denen die jeweils nebeneinander angeordneten Kammern 32 und 33 einerseits und 34 und 33 andererseits durch die schräg zur Innensichtfläche 28 verlaufenden Stege 23 bzw. 24 getrennt werden. Hierdurch wird erreicht, daß sich das Innenmaß der drei Kammern 32, 33 und 34 jeweils zwischen etwa 2 bis etwa 6 mm bewegt. An der jeweils breitesten Stelle dieser Kammern 32, 33 und 34 reicht die lichte Weite gerade aus, um die Kühlmittelzufuhr für diese Kammern durch das Extrusionswerkzeug zu führen.

Sowohl das Flügelrahmenprofil 2 als auch das Blendrahmenprofil 1 weisen durch die großen Verstärkungskammern 4 bzw. 3 eine hervorragende Stabilität und Verwindungssteifigkeit auf, wobei trotz der großen Verstärkungskammern 4 bzw. 3 eine ausgezeichnete Wärmedämmung erzielt wird.

### Legende

- 1: Blendrahmenprofil
- 2: Flügelrahmenprofil
- 3: Verstärkungskammer Blendrahmenprofil
- 4: Verstärkungskammer Flügelrahmenprofil
- 5: Verstärkungsprofil
- 6: Verstärkungsprofil
- 7: Außenkammer
- 8: Außenkammer
- 9: Außenkammer
- 10: Zwischenkammer
- 11: Kammer
- 12: Steg
- 13: Steg
- 14: Steg
- 15: Innenwandung
- 16: Kammer
- 17: Kammer
- 18: Kammer
- 19: Außenwandung
- 20: Innensichtfläche
- 21: Außensichtfläche
- 22: Kammer
- 23: Steg
- 24: Steg
- 25: Steg
- 26: Innenwandung
- 27: Außenwandung
- 28: Innensichtfläche
- 29: Außensichtfläche
- 30: Wandung
- 31: Wandung
- 32: Kammer
- 33: Kammer
- 34: Kammer

## Patentansprüche

1. Hohlkammerprofil (1, 2) zur Herstellung von Fenstern und/oder Türen, mit einer Verstärkungskammer (3, 4) zur Aufnahme eines Verstärkungsprofils (5, 6) und wenigstens einer weiteren, der Verstärkungskammer (3, 4) nach innen oder außen vorgelagerten Kammer (11, 22), wobei die vorgelagerte Kammer (11, 22) zwei im Wesentlichen parallel zur Innen- und Außensichtfläche (20, 21) des Hohlkammerprofils (1, 2) verlaufende Kammerwände (15, 30, 26, 31) aufweist und durch mehrere Stege (12, 13, 14; 23, 24, 25) in kleinere Kammern (16, 17, 18, 32, 33, 34) unterteilt wird, wobei die Unterteilung der vorgelagerten Kammer (11, 22) durch gegenüber den Kammerwänden schräg verlaufende Stege (12, 13, 23, 24) erfolgt, **dadurch gekennzeichnet, dass** das Hohlkammerprofil (1, 2) wenigstens fünf nebeneinander angeordneten Kammern aufweist und die lichte Weite jeder der kleineren Kammern (16, 17, 18, 32, 33, 34) an wenigstens einer Stelle mindestens 5 mm und an wenigstens einer anderen Stelle weniger als 5 mm beträgt.

2. Hohlkammerprofil (1, 2) nach Anspruch 1, **dadurch gekennzeichnet, dass** es durch Extrusion mit Innenkühlung sämtlicher Kammern hergestellt wurde.

3. Hohlkammerprofil (1, 2) nach Anspruch 2, **dadurch gekennzeichnet, dass** es bei einer Extrusionsgeschwindigkeit größer 4 m pro Minute hergestellt wurde.

4. Verwendung eines Verfahrens zur Herstellung eines Hohlkammerprofils (1, 2) nach einem der Ansprüche 1 bis 3, **dadurch gekennzeichnet, dass** das Profil nach Verlassen eines Extrusionswerkzeugs in ein Kaliber geführt und in diesem Kaliber von außen gekühlt wird, wobei sämtliche Kammern (3, 4, 16, 17, 18, 32, 33, 34) des Hohlkammerprofils (1, 2) zusätzlich von innen gekühlt werden.

## Claims

1. Hollow chamber profile (1, 2) for producing windows and/or doors having a reinforcing chamber (3, 4) for accommodating a reinforcing profile (5, 6) and at least one additional chamber (11, 22) that is located in front of the reinforcing chamber (3, 4) facing towards the inside or the outside, the front-located chamber (11, 22) having two chamber walls (15, 30, 26, 31) that are oriented essentially parallel to the inside and outside visible surfaces (20, 21) of the hollow chamber profile (1, 2) and being subdivided into smaller chambers (16, 17, 18, 32, 33, 34) by means of a plurality of partitions (12, 13, 14; 23, 24, 25), the subdivision of the front-located chamber (11, 22) being effected by means of partitions (12, 13, 23, 24) that are inclined in relation to the chamber walls, **characterized in that** the hollow chamber profile (1, 2) exhibits at least five chambers arranged adjacent to one another, and **in that** the free clearance of each of the smaller chambers (16, 17, 18, 32, 33, 34) is at least 5 mm in at least one location and is less than 5 mm in at least one other location.

2. Hollow chamber profile (1, 2) according to Claim 1, **characterized in that** it was manufactured by extrusion with internal cooling of all the chambers.

3. Hollow chamber profile (1, 2) according to Claim 2, **characterized in that** it was manufactured at a rate of extrusion greater than 4 m per minute.

4. Application of a method for the manufacture of a hollow chamber profile (1, 2) according to any one of Claims 1 to 3, **characterized in that** the profile, on emerging from an extrusion tool, is guided into a bore and is cooled in this bore from the outside, in conjunction with which all the chambers (3, 4, 16, 17, 18, 32, 33, 34) of the hollow chamber profile (1, 2) are cooled additionally from the inside.

## Revendications

1. Profilé à chambres creuses (1, 2) pour la fabrication de fenêtres et/ou de portes, comprenant une chambre de renforcement (3, 4) pour recevoir un profilé de renforcement (5, 6) et au moins une autre chambre (11, 22) montée avant la chambre de renforcement (3, 4) vers l'intérieur ou vers l'extérieur, la chambre montée avant (11, 22) présentant deux parois de chambre (15, 30, 26, 31) s'étendant essentiellement parallèlement à la surface visible intérieure et extérieure (20, 21) du profilé à chambres creuses (1, 2), et étant divisée par plusieurs nervures (12, 13, 14 ; 23, 24, 25) en plus petites chambres (16, 17, 18, 32, 33, 34), la division de la chambre montée avant (11, 12) étant réalisée par des nervures (12, 13, 23, 24) s'étendant obliquement par rapport aux parois de la chambre, **caractérisé en ce que** le profilé à chambres creuses (1, 2) présente au moins cinq chambres disposées les unes à côté des autres et la largeur intérieure de chacune des plus petites chambres (16, 17, 18, 32, 33, 34) à au moins un endroit valant au moins 5 mm et à au moins un autre endroit valant moins de 5 mm.

2. Profilé à chambres creuses (1, 2) selon la revendication 1, **caractérisé en ce qu'**il a été fabriqué par extrusion avec refroidissement interne de toutes les chambres.

3. Profilé à chambres creuses (1, 2) selon la revendication 2, **caractérisé en ce qu'**il a été fabriqué à une vitesse d'extrusion supérieure à 4 m par minute.

4. Utilisation d'un procédé de fabrication d'un profilé à chambres creuses (1, 2) selon l'une quelconque des revendications 1 à 3, **caractérisée en ce que** le profilé, après avoir quitté un outil d'extrusion, est guidé dans un calibre et est refroidi depuis l'extérieur dans ce calibre, toutes les chambres (3, 4, 16, 17, 18, 32, 33, 34) du profilé à chambres creuses (1, 2) étant en outre refroidies de l'intérieur.
